# EUROPEAN PATENT APPLICATION

(11) **EP 3 340 561 A1**
(43) Date of publication of application: **27.06.2018**
(21) Application number: 16206768.0
(22) Date of filing: 23.12.2016
(51) Int. Cl.: H04L 29/06, H04W 12/02

(54) **ANONYMIZATION OF NETWORK SUBSCRIBER PERSONAL INFORMATION**

(71) Applicant: Red Mint Network SAS, 74370 Metz-Tessy (FR)
(72) Inventor: Léger, Sébastien, 74370 Metz-Tessy (FR)
(74) Representative: Nicolle, Olivier

(57) **Abstract**

A technique for anonymizing Personally Identifiable Information (PII) of user's based on at least one of generalization and randomisation is described. According to the present subject matter, in an embodiment, at least one user identifier (440), for example, IP address may be extracted from network traffic (310) and irreversibly anonymized to generate an Anonymized Subscriber Identifier (ASI) (432).Further, based on the at least one user identifier (440) and PII corresponding to a user, Randomized Personal Subscriber Information (RPSI) (434) is generated for user's PII. In an aspect, to generate the RPSI (434), at least one of a noise operator and a generalization operator may be applied to at least a portion of the PII based on Tschuprow association measures (436) and Chi-square association measures (438), which may be generated based on subscriber's socio-demographic factors.

## Description

### TECHNICAL FIELD

The present subject matter relates, in general, to data anonymization, and, in particular, to anonymization of network user's/subscribers personal information or Personally Identifiable Information (PII).

### BACKGROUND

Broadband and Mobile communications network provide services that are increasingly used over the world to connect users and organizations as part of business data collection for creating, maintaining and updating segregated consumer database so as to access these segregated consumer network with appropriate commercial offerings. Further, Communications Network Operations Center (NOC) may require accurate and real-time characteristics about network traffic to increase productivity and measure customer satisfaction. However, measurements taken from the traffic data needs to be irreversibly anonymized to avoid direct or indirect exposure of Personally Identifiable Information (PII). Examples of PII include name, address, date of birth, phone number and other identification references pertaining to customer's identity.

### SUMMARY

This summary is provided to introduce a selection of concepts in a simplified form that are further described below in the Detailed Description. This summary is not intended to identify essential features of the claimed subject matter, nor is it intended to be used as an aid in determining the scope of the claimed subject matter.

In an embodiment of the present subject matter, a method for anonymizing user's PII is described. The method comprises extracting at least one user identifier, for example, IP address, corresponding to a user from communication data being communicated over a network. The method further includes generating Randomized Personal Subscriber Information (RPSI) based on the at least one user identifier and PII corresponding to the user. The PII may be include different attributes specific to the users. For example, the different attributes include qualitative attributes and quantitative attributes. These attributes may be demographic factors associated with members of a population like socioeconomic characteristics of a population expressed statistically, such as age, sex, education level, income level, marital status, occupation, average size of a family, average age at marriage and other identification references pertaining to user's identity. In an aspect, generating the RPSI comprises utilizing at least one of Chi-square association measures and Tschuprow association measures for applying at least one of noise and generalization operators to at least a part of the PII. The Tschuprow association measures and the Chi-square association measures may be generated based on subscriber's data or user's data. In addition, the method includes generating anonymized PII based on at least one of the RPSI and an Anonymized Subscriber Identifier (ASI) generated based on the at least one user identifier.

In another embodiment of the present subject matter, a system for anonymizing user's PII is described. The system comprises a tapping unit and a Live Network Probe (LNP) coupled to the tapping unit. The tapping unit may tap communication data being communicated over a network to extract at least one user identifier corresponding to a user. The LNP may include anonymizing unit to generate anonymized PII. In an aspect, the anonymizing unit generates ASI and RPSI. The anonymizing unit generates the ASI by irreversibly anonymizing the at least one user identifier. Further, the anonymizing unit generates the RPSI based on the at least one user identifier and PII corresponding to the user. In an aspect, the anonymizing unit utilizes at least one of Chi-square association measures and Tschuprow association measures for applying at least one of noise and generalization operators to at least a portion of the PII. The Tschuprow association measures and Chi-square association measures may be generated based on subscriber's data or user's data. The anonymizing unit generates the anonymized PII based on at least one of the ASI and the RPSI.

The present subject matter also describes a non-transitory computer readable medium, according to an embodiment of the present subject matter. The non-transitory computer-readable medium comprising computer-readable instructions, which, when executed by a processor in a system, cause the processor to extract at least one user identifier corresponding to a user from communication data being communicated over a network and to generate Randomized Personal Subscriber Information (RPSI) based on the at least one user identifier and PII corresponding to the user. In an aspect, at least one of a noise operator on quantitative attributes of the PII and a generalization operator on qualitative attributes of the PII may be applied by the processor to the PII to generate the RPSI. The at least one of the noise and the generalization operator may be applied based on at least one of Tschuprow association measures and Chi-square association measures, which are generated based on subscriber's data. Further, the processor generates anonymized PII based on at least one of the RPSI and an anonymized subscriber identifier (ASI) generated based on the at least one user identifier.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
Fig.1 shows an illustrative mobile communications network environment that facilitates access to resources by users of computing devices and with which a method and a system may be implemented, in accordance with an exemplary embodiment of the present subject matter.
Fig.2 shows an illustrative web browsing session, which utilizes a request-response communication protocol, in accordance with an exemplary embodiment of the present subject matter.
Fig.3 shows an illustrative Live Network Probe (LNP) that may be located in a mobile communications network or a Broadband Network for monitoring network traffic, in accordance with an exemplary embodiment of the present subject matter.
Fig.4 shows a system block diagram for anonymizing user's Personally Identifiable Information (PII), in accordance with an exemplary embodiment of the present subject matter.
Fig.5 shows illustrative generation of an Anonymized Subscriber Identifier (ASI) and Randomized Personal Subscriber Information (RPSI) at the Live Network Probe (LNP) of the system of Fig.4, in accordance with an exemplary embodiment of the present subject matter.
Fig.6a and Fig.6b show a flowchart of an illustrative method for anonymization user's PII, in accordance with an exemplary embodiment of the present subject matter.
Fig. 7 shows a generation of RPSI for an exemplary qualitative attribute of the PII, in accordance with an exemplary embodiment of the present subject matter.
Fig. 8 shows a generation of RPSI for an exemplary quantitative attribute of the PII, in accordance with an exemplary embodiment of the present subject matter.

### DETAILED DESCRIPTION

The subject matter described herein relates to an anonymization of network user' personal information or Personally Identifiable information (PII) based on at least one of randomization and generalization. Hereinafter, the terms user and subscriber may be used interchangeably.

Providers of a public electronic communications network and the providers of a publicly available electronic communications service handle increasing demand for connectivity. While the increase in data connectivity is exponential, providers' actions are necessary to preserve the integrity and security of the networks and services. Accordingly, increased real-time visibility and network characteristics measurement are essential to carry these actions. When the subscriber has given explicit consent, the measurements also enable providers to create new business services driven by the data. However, data protection rules are required to protect users from direct or indirect exposure of Personally Identifiable information (PII) linked to the measurements taken from the network traffic.

Some of conventional techniques for data anonymization include Pseudonymization and K-anonymity techniques. Pseudonymization is a procedure by which the most identifying fields within a data record are replaced by one or more artificial identifiers, or pseudonyms. Further, K-anonymity technique modifies any potentially identifying information in such a way that a given individual's record cannot be distinguished from at least k other records in structured data. While such techniques achieve a desired level of privacy, K-anonymity based tradeoffs between privacy and distortion inevitably reduce to difficult combinatorial optimization problems.

A two-stage anonymization of mobile network subscriber personal information is disclosed in patent No.US 8,862,880 B2. The two-stage anonymization process is applied to monitored network traffic in which user identifiers, such as the MSISDN (Mobile Station International Subscriber Directory Number), are extracted from the traffic and anonymized to generate an ASI (anonymized subscriber identifier). The ASI is generated by a network probe associated with a Network Intelligence Solution (NIS) arranged for monitoring the mobile communication network. A strictly random RSI (random subscriber identifier) is generated and used to replace the ASI. The RSI is generated at a NIS component upon a first occurrence of an ASI and stored in a lookup table for utilization upon subsequent ASI occurrences. Thus, the data that comes out of the LNP probe is not private until it has been altered by the NIS component. Further, in some conventional arts, for example, in US Patent Publication No. US20110010563, the link between the anonymized data and the PII may be preserved even after anonymization.

Some of the challenges, apart from strong and irreversible privacy protection - are (1) to anonymize data as early as possible in the LNP process; (2) to act in conformation to telecommunications law, so as to refrain from using subscriber's data unless the subscriber concerned has given explicit consent for these actions; and (3) to provide irreversible PII so that the link between the PII and the anonymized data is not preserved.

The present subject matter overcomes these challenges by adding privacy protection to the data as it is generated by the LNP so that the LNP can never expose sensitive or reversible PII. Further the subject matter discussed in this document adds an opt-in / opt-out (in LOOKUP table) so that a subscriber may withdraw consent at any time and the LNP will only generate data for opt-in subscribers and to derive a method where anonymized data cannot be queried based on PII values

According to the present subject matter, a technique for anonymizing Personally Identifiable Information (PII) of subscribers/users based on at least one of generalization and randomization is described. The PII may be include different attributes specific to the users. For example, the different attributes include qualitative attributes and quantitative attributes. These attributes may be demographic factors associated with members of a population like socioeconomic characteristics of a population expressed statistically, such as age, sex, education level, income level, marital status, occupation, average size of a family, average age at marriage, and other attributes pertaining to the users. The described technique for anonymizing user's PII enables various studies and analysis of user behavior to be performed at a heightened level of privacy protection as compared with conventional anonymization schemes that do not utilize the randomization and the generalization based on at least one of Tschuprow association measures and Chi-square association measures.

According to the present subject matter, in an embodiment, at least one user identifier, for example, IP address may be extracted from monitored network traffic and irreversibly anonymized to generate an Anonymized Subscriber Identifier (ASI). Further, based on the at least one user identifier and PII corresponding to a user, Randomized Personal Subscriber Information (RPSI) is generated for user's PII, for example, 'age' of the user. In an aspect, to generate the RPSI, at least one of a noise operator and a generalization operator may be applied to at least a portion of the PII based on Tschuprow association measures and Chi-square association measures, which may be generated based on subscriber's data. Further, anonymized PII may be generated by appending the RPSI to the ASI.

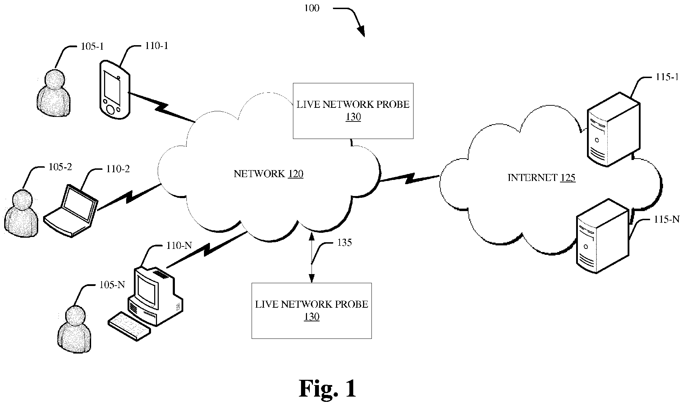

The above mentioned technique is further described with reference to Fig.1 to Fig.8. It should be noted that the description merely illustrates the principles of the present subject matter. It will thus be appreciated that those skilled in the art will be able to devise various arrangements that, although not explicitly described herein, embody the principles of the present subject matter and are included within its spirit and scope. Furthermore, all examples recited herein are principally intended expressly to be only for explanatory purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Fig.1 shows an illustrative a mobile communications network environment 100 that facilitates an access to resources by users 105-1, 105-2....105-N of computing devices 110-1, 110-2....110-N and with which a method and a system may be implemented, in accordance with an embodiment of the present subject matter. For the sake of explanation, the computing devices 110-1, 110-2, ..., 110-N, have been commonly referred to as computing devices 110, and have been individually referred to as computing device 110, hereinafter. In an example, the resources are web-based resources that are provided from various web servers 115-1....115-N. For the sake of explanation, the various web servers 115-1, 115-2...115-N, have been commonly referred to as web server 115, and have been individually referred to as web server 115. Access is implemented, in this illustrative example, via a mobile communication network 120 that is operatively connected to the web server 115 via the Internet 125. Accordingly, the users 105 are typically subscribers to a service that operates in whole or part over the mobile communication network 120. Although the present subject matter describes with respect to mobile communication network 120, it is emphasized that the present subject matter is not necessarily limited in applicability to the mobile communication network and other networks, for example, Public Switched Telephone Network (PSTN) may also be utilized in the present subject matter.

Further, the mobile communications network 120 may be arranged using one of a variety of alternating networking standards such as General Packet Radio Service (GPRS), Universal Mobile Telecommunications System (UMTS). Global System for Mobile Communications/Enhanced Data Rates for GSM Evolution (GSM/EDGE), Code Division Multiple Access (CDMA), CDMA 2000, or other 2.5^{th} generation, 3^{rd} generation, 3^{rd} generation plus, and 4^{th} generation ( 2.5G, 3G, 3G+, or 4G+) wireless standards, and the like.

The computing devices 110 may include any one of electronic devices or information appliances that are typically portable and battery-operated and which may facilitate communications using voice and data. For example, the computing devices 110 can include mobile phones, e-mail appliances, smart phones, Personal Digital Assistants (PDAs), personal computers, tablet devices, IOT (Internet Of Things) nodes and the like. Typically, the computing device 110 will include various capabilities such as the provisioning of a user interface that enables a user to access the Internet 125, browse, and selectively interact with web pages that are served by web servers 115.

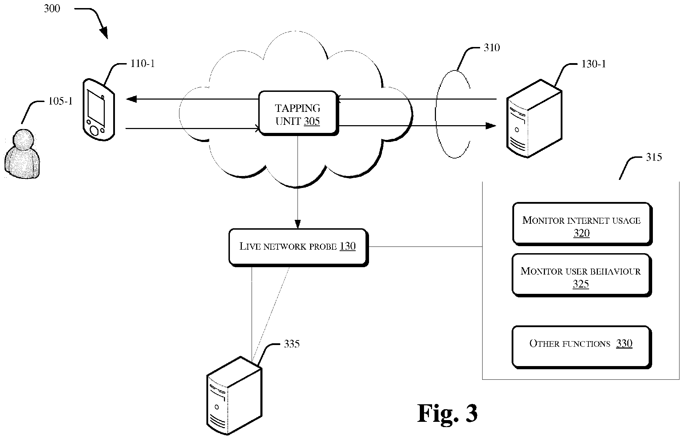

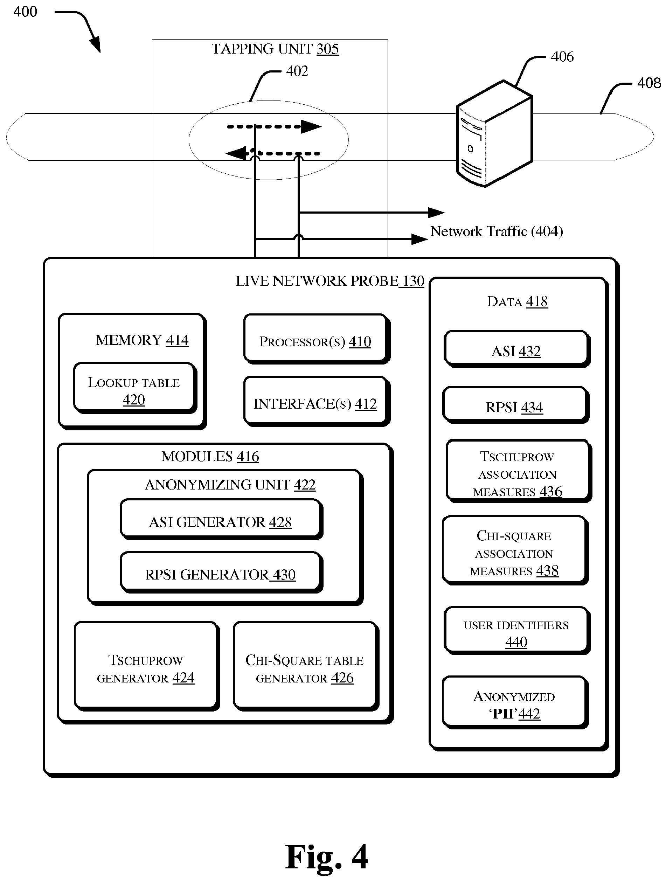

The network environment 100 may further include a network tap or tapping unit (not shown in the Fig.1) to tap or access the network traffic traversing over the mobile communication network 120. In an embodiment, a Live Network Probe (LNP) 130 is also provided in the environment 100 and operatively coupled to the network tap or tapping unit (not shown in the Fig.1) provided in mobile communication network 120, or a Broadband network in order to monitor the mobile communication network 120. In another embodiment, the LNP 130 may be remotely located from the mobile communications network 120 and may be operatively coupled to the network 120 or the network node, using a communication link 135 for locally buffering data that is being exchanged between the network 120 and the Internet 125 and from the buffering is enabled in the remotely located LNP 130. The LNP 130 is further described in detail with respect to Fig.3 and Fig.4.

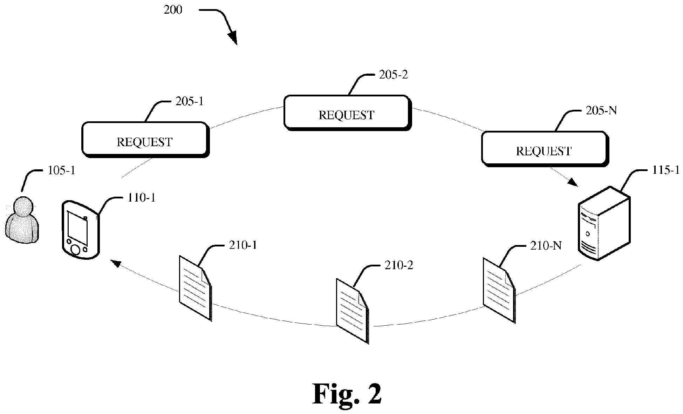

Fig.2 shows an illustrative web browsing session, which utilizes a request-response communication protocol, in accordance with an exemplary embodiment of the present subject matter. In an example, illustrating web-browsing session in the Fig.2 utilizes Hyper Text Transfer Protocol (HTTP), which is referred to as a request-response protocol that is commonly utilized to access web servers 115. Access typically consists of file requests 205-1, 205-2...205-N for pages or objects from a browser application executing on computing device 100, for example, a mobile equipment, to a web server 115 and corresponding responses 210-1,210-2...210-N from the web server 115. Thus, at a high level, the user 105 interacts with a browser to request, for example, Uniform Resource Locator (URL) to identify a site of interest, then the browser requests the page from the web server 115. When receiving the page, the browser parses it to find all of the component objects such as images, sounds, scripts, etc., and then makes request to download these objects from the web servers 115.

Fig.3 shows a Live Network Probe (LNP) that may be located in a mobile communication network or a Broadband network and which obtains the network traffic or communication data flowing across the network, in accordance with an embodiment of the present subject matter. In the mobile communication network, the LNP may be located at one of a GPRS support node (GGSN), Serving GPRS support node (SGSN) with UMTS and GSM a Packet Data Network (PDN) Gateway (P-GW) with LTE. In the Broadband Network, the LNP may be located at one of a Provider Edge Router (PE Router), A Provider Router (P Router) and a Customer Edge Router (CE Router).

In an embodiment, the LNP 130 may be configured as one or more software applications or code sets that are operating on a computing platform such as a server 335 or distributed computing system. In another embodiment, the LNP 130 can be arranged using hardware and/or firmware, or various combination of the hardware, firmware, or software as may be needed to meet the requirements of a particular usage scenario. As shown, the network traffic or the communication data typically in the form of IP packets 310 flowing through the mobile communication network 120, or a node of the network, may be captured via the tapping unit 305. Hereinafter, the network traffic accessed from the network 120 may be referred as monitored network traffic. In an embodiment, the LNP 130 may receive the monitored network traffic and may perform a variety of analysis 315. As indicated in the Fig.3, the variety of analysis 315 may include, but not limited to, monitoring Internet usage 320 by the users 105, monitoring user behaviors 325, and performing other analytical and monitoring functions 330 as may be required. In some embodiments, the LNP 130 may use Deep Packet Inspection (DPI) machine (not shown in the Fig.3) to perform packet inspection of the monitored network traffic in order to extract information from the monitored network traffic, i.e., the IP packets 310. It is understood that the exemplary analyses shown in the Fig.3 are intended to be illustrative and that the number and particular analyses that are utilized in any given application can differ from above mentioned analysis.

Fig.4 shows a system for anonymizing user's Personally Identifiable Information (PII), in accordance with an embodiment of the present subject matter. As shown in the system 400, in an embodiment, the system 400 comprises a tapping unit 305 that may be coupled to a Live Network Probe 130 via a communication link 135 that was illustratively described with respect to Fig-1. The tapping unit 305 includes a mirror port 402, which may be configured to copy all or portion of network traffic 404. The mirror port 402, conforming to the Gn (i.e., Ethernet) interface in the GPRS protocol, at least a portion of network traffic 404 is extracted from GTP (GPRS Tunnelling Protocol) traffic at a Gateway GPRS Support Node (GGSN) 406 along some portion 408 of the mobile communication network 120 or the Broadband network or the LTE network. The network traffic 404 may include IP packets that are sent to the LNP 130 for further processing.

As previously discussed, LNP 130 may be configured as one or more software applications or code sets that are operating on a computing platform such as server 330 or distributed computing system. In another embodiment, the LNP 130 can be arranged using hardware and/or firmware, or various combination of the hardware, firmware, or software as may be needed to meet the requirements of a particular usage scenario.

In an embodiment, the LNP 130 may include different components such as processor(s) 410, an interface(s) 412, and a memory 414. Further, the LNP 130 may include module(s) 416 and data 418. Although the LNP 130 shown in the Fig.4 includes combination of hardware and software, it may be understood that the LNP 130 may only be configured with one or more software applications that are operative on a computing platform, for example, server 335, that was illustratively shown in the Fig.3.

The processor 410, amongst other capabilities, may be configured to fetch and execute computer-readable instructions stored in the memory 414. The processor 410 may be implemented as one or more microprocessors, microcomputers, microcontrollers, digital signal processors, central processing units, state machines, logic circuitries, and/or any devices that manipulate signals based on operational instructions. The functions of the various elements shown in the figure, including any functional blocks labelled as "processor(s)", may be provided through the use of dedicated hardware as well as hardware capable of executing software in association with appropriate software. When provided by a processor 410, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), non-volatile storage. Other hardware, conventional and/or custom, may also be included.

The interface(s) 412 may include a variety of machine readable instructions-based interfaces and hardware interfaces that allow the LNP 130 to interact with different entities, such as the processor 410, the module 416, and the data 418. Further, the interface(s) 412 may provide a set of tools to enable administrator to perform a variety of management functions pertaining to the present subject matter. Further, the interfaces 412 may facilitate multiple communications within a wide variety of networks and protocol types, including wireless networks, wireless Local Area Network (WLAN), RAN, satellite-based network, etc.

The memory 414 may be coupled to the processor 410 and may, among other capabilities, provide data and instructions for generating different requests. The memory 414 can include any computer-readable medium known in the art including, for example, volatile memory, such as static random access memory (SRAM) and dynamic random access memory (DRAM), and/or non-volatile memory, such as read only memory (ROM), erasable programmable ROM, flash memory, hard disks, optical disks, and magnetic tapes. In an example, a lookup table 420 may be typically implemented in volatile memory. The lookup table may be generated based on subscriber's data or user's data. In particular, the lookup table may include Personally Identifiable Information (PII) of the users. The PII may be include different attributes specific to the users. For example, the different attributes include qualitative attributes and quantitative attributes. These attributes may be demographic factors associated with members of a population like socioeconomic characteristics of a population expressed statistically, such as age, sex, education level, income level, marital status, occupation, average size of a family, and average age at marriage. The lookup table 420 also includes unique identifiers, for example, IP Addresses, associated with the users.

The module(s) 416 may include routines, programs, objects, components, data structures, and the like, which perform particular tasks or implement particular abstract data types. Further, the module 416 can be implemented in hardware, instructions executed by a processing unit, or by a combination thereof. As shown in the system 400, the modules 416 may include, but not limited to, an anonymizing unit 422, a Tschuprow generator 424, and a Chi-square generator 426. The anonymizing unit 422 further includes ASI generator 428 and RPSI generator 430.

In another aspect of the present subject matter, the module(s) 416 may be machine-readable instructions (software) which, when executed by a processor/processing unit 410, perform any of the described functionalities. The machine-readable instructions may be stored on an electronic memory device, hard disk, optical disk or other machine-readable storage medium or non-transitory medium. In one implementation, the machine-readable instructions can also be downloaded to the storage medium via a network connection.

The data 418 serves, amongst other things, as a repository for storing data that may be fetched, processed, received, or generated by one or more of the module(s) 416. As shown in the system 400, the data 418 may include, but not limited to, Anonymized Subscriber Identifier (ASI) 432, Randomized Personal Subscriber Information (RPSI) 434, Tschuprow association measures 436, Chi-square association measures 438, extracted user identifiers 440, and anonymized PII 442.

In operation, the tapping unit 305 taps the network traffic 404 and the tapped network traffic or the monitored network traffic 404 may be transmitted to the LNP 130 for further processing. In an embodiment, the LNP 130 may extract at least one user identifier 440 associated with a user from the monitored network traffic 404. In an embodiment, the LNP 130 may perform inspection of the IP packets 404 to extract the at least one user identifier 440. The at least one user identifier 440 may include, but not be limited to, IP address, Mobile Station International Subscriber Directory Number (MSISDN), and International Mobile Subscriber Identity (IMSI).

The anonymizing unit 416 may be configured to generate anonymized PII 442 of the user 105 illustrated in Fig-1, based on at least one of the RPSI 434 and ASI 432 generated based on the at least one user identifier 440.

In an embodiment, upon extracting the at least one user identifier 440, the ASI generator 428 may be configured to generate the ASI 432 by irreversibly anonymizing the at least one user identifier 440. In an aspect, the ASI generator 428 may apply a keyed hash function, for example, Hash-based Message Authentication Code-Secure Hash Algorithm1 (HMAC-SHA1) to the at least one user identifier 440. A collision-free Random Number Generator (RNG) initializes a key corresponding to the keyed hash function. In an example, the generated ASI 432 is represented as a long string in an exemplary hexadecimal form.

In an embodiment, the RPSI generator 430 may generate RPSI 434 for the PII of the user. In an example, the PII corresponding to the user may be retrieved from the lookup table 420 by matching the extracted unique identifier 440 with subscriber's data in the lookup table 420. Upon retrieving the PII associated with the user 105 illustrated in Fig-1, the anonymizing unit 422 utilizes at least one of Tschuprow association measures 436 and Chi-square association measures 438 to apply at least one of a noise operator and a generalization operator to at least a portion of the PII of the user. For example, if the PII of the user includes attributes such as 'age', 'gender' and 'location', then the RSPI generator 430 identifies the attribute(s) to which either the noise operator or the generalization operator can be applied to generate the RPSI 434 for identified attributes. To identify such attributes, the RPSI generator 430 may utilize at least one of Tschuprow association measures 436 and the Chi-square association measures 438 to determine the level of association between the attributes.

In an embodiment, the RPSI generator 430 may utilize the Tschuprow association measures 436 to determine the level of association between the attributes. In another embodiment, the RPSI generator 430 may utilize the Chi-square association measures 438 to determine the level of association between the attributes. For example, the Tschurow generator 424 may generate the Tschuprow measures 436 based on PII of users in the lookup table 420, and the Chi-square generator 426 may generate the Chi-square measures 438 based on the PII of users in the lookup table 420. Techniques to generate the Tschuprow association measures 436 and the Chi-square association measures 438 are known to a person skilled in the art.

In an aspect, the association score (T) between attributes of the PII may indicate a stronger association when a measure of the association between the attributes is greater than a minimum association value (Tmin). The association score (T) is used as a measure to modify the quantitative and qualitative attributes. Detection of a strong association may cause the noise operator to be applied to the quantitative attributes and causes the generalization operator to be applied to the qualitative attributes. Further, in an aspect, the application of the noise operator includes modifying the quantitative attribute with a random noise, and the application of the generalization operator includes generalizing the qualitative attribute. In effect the association score (T) between attributes of the PII is the guide to ensure irreversible anonymization of the PII data.

For example, when the association between the attribute such as 'age' and 'location' of the user is determined to be greater than the minimum association value(Tₘᵢₙ), the noise operator is applied to the 'age' and the generalization operator is applied to the 'location'. If the initial age of the user is 35 years, then the random noise, for example, 5 years, may be added to the initial 'age' to generate the RPSI 434 for the age. Likewise, if the 'location' of the user is 'London', then the location 'London' may be generalized to 'United Kingdom, which is the RPSI 434 for the 'location'. Thus, the present subject matter applies the noise operators and the generalization operators to generate the RPSI 434 depending on the type of the attributes of the PII.

In an embodiment, an amount of noise or a level of the noise to be applied as the random noise can be a value of normal distribution in which a standard deviation is a function of the Tschuprow association measures 436 or the Chi-square association measures 438 for the given PII. The requirement of adding noise can also be realized by adding a function of statistical noise with constant parameters of such a function defined by the user. Further, a level of generalization to be applied to generate the RPSI for the qualitative attribute can be a function of the Tschuprow association measures or Chi-square association measures for the given PII.

In an embodiment, when the association (T) between the attributes of the PII is determined to be less than the minimum association value (Tₘᵢₙ), in such cases, the RPSI 434 for corresponding attributes are equal to values of the corresponding attributes. For example, if the association between the attributes 'age' and 'gender' is less than the minimum association value, then the RPSI 434 for the 'age' and 'gender' are equal to their unanonymized values, i.e., without being modified either by the noise operator or by the generalization operator.

In an embodiment, the anonymizing unit 422 may generate the anonymized PII 442 based on at least one of the ASI and the RPSI. In an aspect, the anonymizing unit 422 generates the anonymized PII 442 by appending the RPSI 434 to the ASI 432. For example, the anonymized PII 442 for the attribute 'age' is obtained by appending the hexadecimal code (i.e., ASI) and the RPSI 434 obtained for the attribute 'age'. In an embodiment, the system 400 may comprises a memory unit to store the generated anonymized PII 442. Alternatively, the anonimized PII will be sent to an external system for storage and statistical analysis at a later point in time.

In an embodiment, the association between the ASI 432 and the RPSI 434 is deterministic as long as the key corresponding to the keyed hash function and the lookup table 420 remains same. This deterministic nature tends to undermine privacy protection. The manipulations with respect to the RNG key is to strike a balance between enabling complete privacy of data and usability of such features. Such a trade-off of this controlled determinism enables preserving heightened privacy protection. The ASI is deterministic as long as RNG is the same. While the ASI can not be reversed (since RNG is random and ASI uses keyed hash cryptography) the LNP will generate data over time and this data can be accumulated in a 'subscriber profile'. By randomly and periodically changing the RNG key, the present subject matter ensures that subscriber profiles will be limited in size.

On the contrary, as long as the key is the same it enables various statistical analysis e.g. counting unique visitors for a specific site in a given time window. These 'unique' counters would be inaccurate if the ASI was purely random instead of using 'controlled determinism'. In effect, controlled determinism is enabled as long as RNG key is the same, and privacy is protected by randomly changing the key on a regular basis. The principle idea is then to effect a trade-off between these two controlling factors.

In an embodiment, the key corresponding to the keyed hash function and lookup table 420 may be assigned a time-to-live (TTL) value that when exceeded will cause the automatic updating of the key and the lookup table 420. For example, the time-to-live value can be 24 hours. The TTL value may be configured to be specifiable in some cases by an administrator or other personnel having access to the LNP 130. In an aspect, the Tschuprow association measures 436 and the Chi-square association measures 438 are automatically updated whenever the lookup table 420 is updated.

In an embodiment, the present subject matter provides an opt-in / opt-out (in Lookup table) feature so that a subscriber may withdraw consent at any time and the LNP will only generate data for opt-in subscribers.

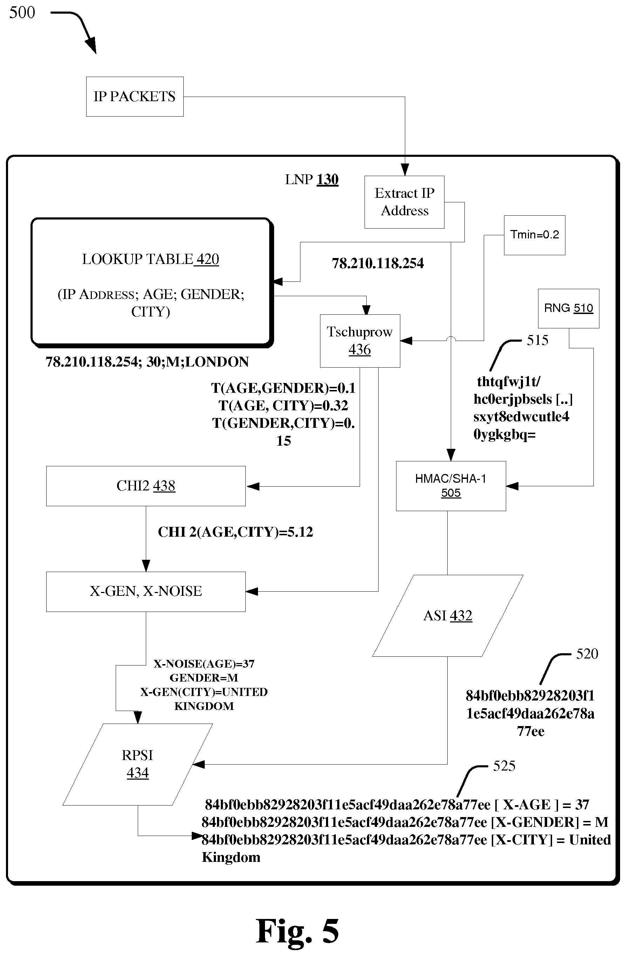

Fig.5 shows illustrative generation of ASI and RPSI at the Live Network Probe (LNP) of the system of Fig.4, in accordance with an exemplary embodiment of the present subject matter.

As discussed with respect to Fig.4, at least one user identifier 440 may be extracted from the monitored network traffic having IP packets 310 obtained from the tapping unit 305. In this example, IP address is considered as a user identifier 440. As shown, IP address (78.210.118.254) of a device of the user communicating over the network 120 is obtained. An irreversible anonymization process is implemented at the LNP 130 to generate anonymized code for the IP address. The anonymized code is referred to here as the ASI 432. To generate the ASI 432, the ASI generator 428 applies a keyed hash function 505, for example, Hash-based Message Authentication Code-Secure Hash Algorithm1 (HMAC-SHA1) to the IP address. A collision-free Random Number Generator 510 (RNG) initializes a key corresponding to the keyed hash function 505. In this example, the key is represented in string of hexadecimal numbers as shown in the Fig.5 by a reference numeral 515. The ASI 428 is also represented in string of hexadecimal numbers as shown in the Fig.5 by a reference numeral 520.

As illustrated in the Fig.5, the lookup table 420 includes subscribers data having attributes such as 'age', 'gender', 'IP address', and 'city/location' picked up by the LNP. Based on the data in the lookup table 420, the Tschuprow association measures 436 and the Chi-square association measures 438 are generated. The extracted IP address, i.e., 78.210.118.254 is compared with IP addresses in the lookup table 420 to retrieve the PII related to the user. In this example, retrieved PII of the user includes 'age' 'gender' and 'city' having values 30, M, and 'London', respectively.

As previously discussed, the Tschuprow association measures 436 indicate a level of association between the attributes. As shown in the Fig.5, the level of association score between the 'age' and 'gender' is determined to be 0.1, i.e., T (age, gender) is equal to 0.1, the level of association score between the 'age' and 'city' is determined to be 0.32, i.e., T (age, city) is equal to 0.32, and the level of association score between the 'gender' and 'city' is determined to be 0.15, i.e., T (gender , city) is equal to 0.15.

These derived scores are next to be compared with threshold values above, which the association of the PII information cannot be considered as irrecoverably anonymized. The derived associations between different attributes are compared with a minimum association value, i.e., Tₘᵢₙ in each of the cases. In this example, Tₘᵢₙ is choosen as 0.2. However, Tₘᵢₙ can be between 0 and 1 since the association values as generated the Tschuprow association measures 436 is always in the range 0 to 1

Based on the comparison, it is observed that there is a strong association between the 'age' and the 'city', as the T (age, city) is greater than the Tₘᵢₙ. Further, the association between the 'age' and 'city' can also be derived based on the Chi-square association measures 438. As shown in the Fig.5, the association between the 'age' and the 'city', i.e., chi-square (age, city) is equal to 5.12. For instance, chi-square association between the 'age' and the 'city' can be calculated based on construction of tables of contingencies between 'age' and 'city' variables.

The stronger association between the 'age' and the 'city' causes the noise operator, i.e., X-NOISE (x) to be applied to the quantitative attribute, i.e., 'age', and the generalization operator, i.e., X-GEN(x) to be applied to the qualitative attribute, i.e., 'city' to generate RPSI 434 for the 'age" and 'city', respectively. The amount of noise to be applied and the level of generalization depends on the Tschuprow association measures 436 and the Chi-square association measures 438. In this example, when the random noise is applied to the 'age', the value of the 'age' is increased to 37 years from 30 years, i.e., X-NOISE (age) is equal to 37. Further, when the generalization operator is applied to the 'London', the 'London' generalized to 'United Kingdom'. As there is no strong association between the 'gender' and other attributes, the attribute 'gender' is neither generalized nor noise applied to generate RPSI. In such cases, the RPSI for the 'gender' is same as the PII, i.e., RPSI for the 'gender' is equal to its unanonymized value, i.e. 'M'.

To generate anonymized PII 442, the anonymizing unit 422 appends the generated RPSI 434 to the ASI 432. For example, to generate the anonymized PII 442 for the 'age', the ASI is appended with the RPSI generated for the 'age'. An exemplary anonymized PII is shown in the Fig.5 by a reference numeral 525.

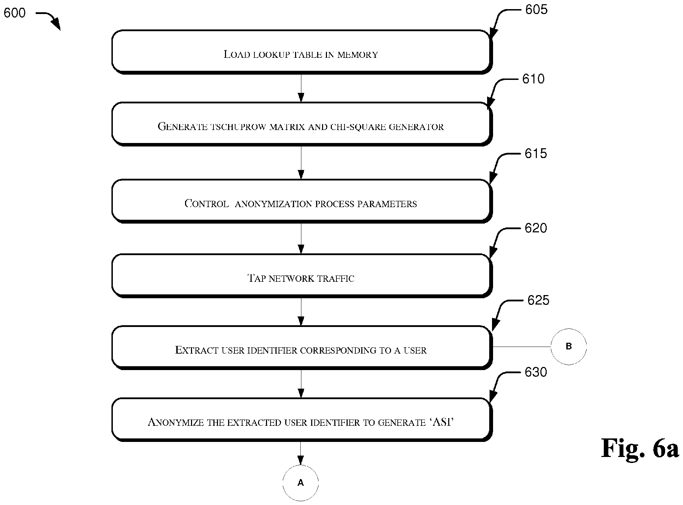

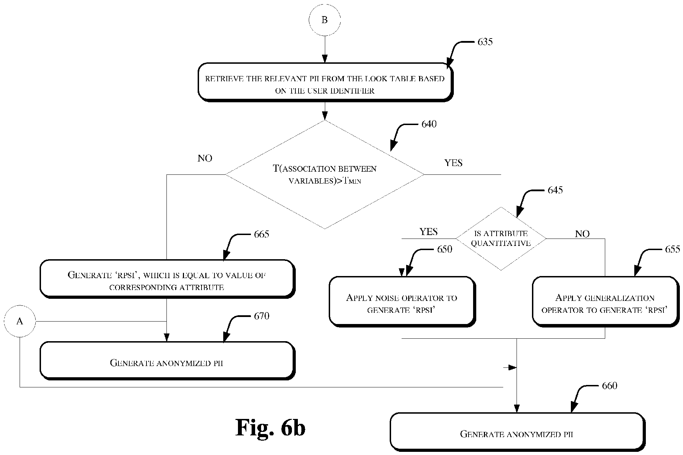

Fig.6a and Fig.6b show a flowchart of an illustrative method for anonymization of network subscriber personal information or the PII of user, in accordance with an embodiment of the present subject matter. The order in which the method blocks are described is not included to be construed as a limitation, and some of the described method blocks can be combined in any order to implement the method 600, or an alternative method. Additionally, some of the individual blocks may be deleted from the method 600 without departing from the scope of the subject matter described herein. Furthermore, some of the blocks of the method 600 can be implemented in any suitable hardware, software, firmware, or combination thereof.

At block 605, a lookup table 420 may be loaded into the memory. In an example, the lookup table 420 may be generated based on subscriber's data or user's data. In particular, the lookup table 420 may include Personally Identifiable Information (PII) of the users. The PII may be include different attributes specific to the users. For example, the different attributes include qualitative attributes and quantitative attributes. For example, qualitative attributes can be 'gender' and 'Location', and the quantitative attributes can be 'age' and 'Income level. The lookup table 420 also includes unique identifiers, for example, IP Addresses, associated with the users.

At block 610, based on the data in the lookup table 420, Tschuprow association measures 436 and the Chi-square association measures 438 may be generated by a Tschuprow generator 424 and a Chi-square generator 426, respectively. The Tschuprow association measures 436 and the Chi-square association measures 438 indicate the level of association between the different attributes of the PII. For example, the Tschuprow association measures 436 and the Chi-square association measures 438 indicate the level of association between the 'age' and 'gender', 'age' and 'city', and 'city' and 'gender'.

At block 615, one or more tools can be exposed through the interface to enable an administrator or other personnel to control various parameters used in the method of anonymizing the PII. For example, to anonymize at least user identifier 440, the parameters that control anonymization include: Tₘᵢₙ, controlling the threshold of association; the time until the RNG key is reset; and the lookup table content. These changes in these parameter settings can be enabled by having a terminal (text console protected by password) or remote access by an administrator who would be able to change the above parameters, and/or update the lookup table by downloading a new file since the subscriber's database and opt-in choices may change over time.

At block 620, traffic flowing across the network or network node is monitored by the tapping unit 305 to collect IP packets 310. At block 625, the method comprises extracting at least one user identifier 440 corresponding to a user from the collected IP packets or communication data being communicated over the network 120. For example, IP address is extracted from the communication data or the monitored network traffic at the LNP 130. An ASI 432 may be generated by the ASI generator 428 application of a cryptographic hash function, such as HMAC-SHA1, to the extracted IP address, at block 630. Upon generating the ASI 432, the method includes generating Randomized Personal Subscriber Information (RPSI) 434 based on the at least one user identifier and PII corresponding to the user. The RPSI 434 may be generated by utilizing at least one of chi-square association measures and tschuprow association measures for applying at least one of noise and generalization operators to at least a portion of the PII.

To generate RPSI 430, at block 635, the RPSI generator 430 matches at least one user identifier 440, for example, IP address with IP addresses in the lookup table 420 to retrieve the relevant PII of the user. The relevant PII may include different attributes, for example, 'age', 'gender', and 'city' of the user 105. Upon retrieving the relevant PII of the user 105, at block 640, a comparison is made between the level of association between the attributes of the PII and a minimum association value (Tₘᵢₙ). For example, the level of association between the 'age' and the 'city' is compared with the minimum association value (Tₘᵢₙ)· In an example, the minimum association value is 0.2. In another example, the minimum association value can be between 0 and 1.

Upon determining that the level of association between the attributes of the PII is greater than the minimum association value (Tₘᵢₙ), a type of the attribute is identified at block 645. The attribute may be a quantitative attribute or a qualitative attribute. The method further includes generating RPSI 434 based on the type of attribute. A noise operator is applied to the quantitative attribute for generating the RPSI 434 for the corresponding quantitative attribute, as stated at block 650. For example, the noise operator (X-NOISE) is applied to 'age' to generate X-NOISE (age). When the type of attribute is identified as the qualitative attribute, a generalization operator may be applied to the qualitative attribute to generate RPSI 434 for the corresponding qualitative attribute, as stated at block 655. For example, the generalization operator (X-GEN) is applied to 'city to generate X-GEN (city).

At block 660, the method includes generating an anonymized PII 442 by the anonymizing unit 422 based on at least one of the ASI 432 and the RPSI 434. For instance, the anonymizing unit 422 generates the anonymized PII 442 by appending the ASI generated at block 630 and the RPSI generated at blocks 650 or at block 655. In an example, anonymized PII for 'age 'is generated by appending the ASI generated at block 630 and the RPSI generated at block 650. In an example, anonymized PII for 'city' is generated by combining the ASI generated at block 630 and the RPSI generated at block 655. Further, the method comprising analyzing the user's behavior based on the generated anonymized PII. For example, the generated anonymized PII may be sent to local storage or remote storage for further analysis such as to determine Internet usage statistics etc.

Returning to block 640, when the association between the attributes of the PII is determined to be less than the minimum association value, neither the noise operator nor the generalization operator is applied to generate RPSI, as stated at block 665. For example, if the association between the 'age' and the 'gender' is less than the minimum association value, the RPSI for the 'gender' remains same as PII for the 'gender', i.e., 'M'. Further, at block 670, the anonymized PII is generated by the anonymizing unit 422 based on the ASI generated at the block 635 and the PII at the block 665. Further, the generated anonymized PII may be sent to local storage or remote storage for further analysis such as to determine Internet usage of the user etc.

In an embodiment, the key corresponding to the keyed hash function and lookup table may be assigned a time-to-live (TTL) value that when exceeded will cause the automatic updating of the key and the Lookup table. For example, the time-to-live value can be 24 hours. The TTL value may be configured to be specifiable in some cases by an administrator or other personnel having access to the LNP 130. In an aspect, the Tschuprow measures and the Chi-square measures are automatically updated whenever the lookup table is updated, and the method steps are repeated to generate the anonymized PII.

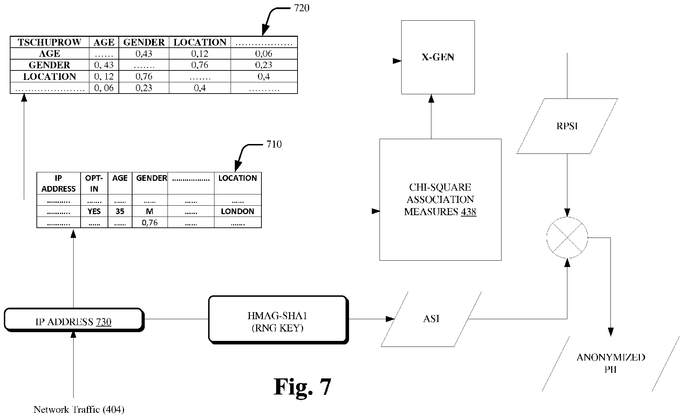

Fig. 7 shows a generation of RPSI for an exemplary qualitative attribute of the PII of the user, in accordance with an exemplary embodiment of the present subject matter. As shown in the Fig.7, an exemplary lookup table is referred by a reference numeral 710 and exemplary Tschuprow matrix including Tschuprow association measures is referred by a reference numeral 720. As shown in the Fig.7, IP Address is extracted from monitored network traffic and by using the IP address, the ASI 432 is generated by the ASI generator 428. The ASI generator 428 generates the ASI by irreversibly anonymizing the IP address. In an aspect, the ASI generator 428 applies a Hash-based Message Authentication Code-Secure Hash Algorithm1 (HMAC-SHA1) to the IP address. A collision-free Random Number Generator (RNG) initializes a key corresponding to the keyed hash function. The generated ASI 428 is represented in an exemplary hexadecimal form.

Further, to generate the RPSI 434, RPSI generator 430 matches the extracted IP address with data in the lookup table to retrieve relevant PII of the user. As shown in the lookup table 710, the PII related to the user includes attributes such as 'age' 'gender' and 'location' having values 35, M, and London, respectively. Upon identifying the relevant PII of the user, an association between the attributes is derived based on Tschuprow association measures included in the Tschuprow matrix 720. For instance, the Tschuprow association measures are calculated by using the chi-square association measures.

In this example, the generalization operator (X-GEN) processes the qualitative attributes, for example, location, to generate the RPSI 434 for the corresponding attributes. As shown in the Fig.7, the generalization operator receives (X-GEN) inputs such as level of generalization to be applied. For example, the level of generalization is determined using Chi-square association measures and Tschuprow association measures for the given PII. In this example, when the generalization operator (X-GEN) is applied to the value of the 'location' attribute, the value of the location might change to 'United Kingdom' from 'London' depending on the level of generalization.

Once the RPSI 434 for a qualitative attribute is generated, the anonymizing unit 422 generates an anonymized PII 434 by appending the RPSI to the ASI, as shown in the Fig.7.

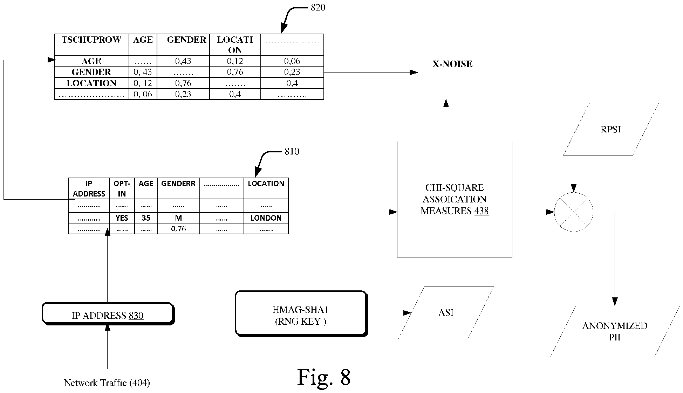

Fig. 8 shows a generation of RPSI for an exemplary quantitative attribute of the PII of the user, in accordance with an exemplary embodiment of the present subject matter. As shown in the Fig.8, an exemplary lookup table is referred by a reference numeral 810 and an exemplary Tschuprow matrix including Tschuprow association measures is referred by a reference numeral 820. As shown, IP Address is extracted from monitored network traffic and by using the IP address, the ASI generator 428 generates the ASI 432. The ASI generator 428 generates the ASI by irreversibly anonymizing the IP address. In an aspect, the ASI generator 428 applies a Hash-based Message Authentication Code-Secure Hash Algorithm1 (HMAC-SHA1) to the IP address. A collision-free Random Number Generator (RNG) initializes a key corresponding to the keyed hash function. The generated ASI 428 is represented in an exemplary hexadecimal form.

Further, to generate the RPSI 434, RPSI generator 430 matches the extracted IP address with data in the lookup table 810 to retrieve relevant PII of the user. As shown in the lookup table 810, the PII related to the user identified includes attributes such as 'age' 'gender' and 'location' having values 30, M, and London, respectively. Upon identifying the relevant PII of the user, an association between the attributes is derived based on Tschuprow association measures included in the Tschuprow matrix 820.

In this example, a noise operator (X-NOISE) processes the quantitative attributes, for example, age, to generate the RPSI for the corresponding attributes. The noise operator receives a level of noise to be applied to the quantitative attributes. For example, the level of noise or a random noise to be applied can be determined based on Chi-square association measures and Tschuprow association measures for the given PII. In this example, when the noise operator (X-GEN) is applied to the value of the 'age', the value of the age might change to 37 years from 30 years depending on the level of noise applied. Once the RPSI for a quantitative attribute is generated, an anonymized PII is generated by the anonymizing unit 422 by appending the RPSI to the ASI, as shown in the Fig.8.

Although implementations of present subject matter have been described in language specific to structural features and/or methods, it is to be understood that the present subject matter is not necessarily limited to the specific features or methods described. Rather, the specific features and methods are disclosed and explained in the context of a few example embodiments for anonymizing user's PII.

## Claims

1. A method for anonymizing user's Personally Identifiable Information (PII), the method comprising:
extracting at least one user identifier (440) corresponding to a user from communication data (310) being communicated over a network (120);
generating Randomized Personal Subscriber Information (RPSI) (434) based on the at least one user identifier (440) and PII corresponding to the user; and
generating anonymized PII (442) based on at least one of the RPSI (434) and an anonymized subscriber identifier (ASI) (432) generated based on the at least one user identifier (440).

2. The method as claimed in claim 1, wherein the method comprising analyzing the user's behavior based on the generated anonymized PII (442).

3. The method as claimed in claim 1, wherein the method comprising anonymizing the at least one user identifier (440) to generate the ASI (432), is irreversible.

4. The method as claimed in claim 3, wherein the anonymizing comprises applying a keyed hash function (505) for generation of the ASI (432), wherein a key corresponding to the keyed hashed function (505) is initialized by a collision-free random number generator (510).

5. The method as claimed in claim 1, wherein the at least one user identifier (440) includes an Internet Protocol (IP) address and an International Mobile Subscriber Identity (IMSI).

6. The method as claimed in claim 1, wherein the generating the RPSI (434) comprises retrieving the PII of the user from a lookup table (420) by matching data of users in the lookup table (420) with the at least one user identifier (440).

7. The method as claimed in claim 6, wherein the generating the RPSI (434) further comprises utilizing at least one of chi-square association measures (438) and tschuprow association measures (436) for applying at least one of noise and generalization operators to at least a portion of the PII, and wherein the chi-square association measures (438) and the tschuprow association measures (436) are generated using the PII.

8. The method as claimed in claim 1, wherein the generation of the anonymized PII (442) includes appending the RPSI (434) to the ASI (432).

9. A system (400) for anonymizing user's Personally Identifiable Information (PII), the system (400) comprising:
a tapping unit (305) to tap communication data (310) being communicated over a network (120) to extract at least one user identifier (440) corresponding to a user;
a live network probe (130) coupled to the tapping unit (305), wherein the live network probe (130) comprises an anonymizing unit (422) to:
generate Randomized Personal Subscriber Information (RPSI) (434) based on the at least one user identifier (440) and PII corresponding to the user; and
generate anonymized PII (442) based on at least one of the RPSI (434) and an anonymized subscriber identifier (ASI) (432) generated based on the at least one user identifier (440).

10. The system (400) as claimed in claim 9, wherein the anonymizing unit (422) extracts the at least one user identifier (440) from the communication data (404), and wherein the at least one user identifier (440) comprises an Internet Protocol (IP) address and an International Mobile Subscriber Identity (IMSI).

11. The system (400) as claimed in claim 9, wherein the anonymizing unit (422) retrieves the PII of the user from a lookup table (420) by matching data of users in the lookup table (420) with the extracted user identifier (440).

12. The system (400) as claimed in claim 9,wherein the anonymizing unit (422) utilizes at least one of chi-square association measures (438) and tschuprow association measures (436) to apply at least one of noise and generalization operators to at least a portion of the PII to generate the RPSI (434).

13. The system (400) as claimed in claim 9, wherein the anonymizing unit (422) applies a keyed hash function (505) to generate the ASI (432), and wherein a key corresponding to the keyed hashed function (505) is initialized by a collision-free random number generator (510).

14. A non-transitory computer-readable medium comprising computer-readable instructions, which, when executed by a processor (410) in a system (400), cause the processor (410) to:
extract at least one user identifier (440) corresponding to a user from communication data (310) being communicated over a network (120);
generate Randomized Personal Subscriber Information (RPSI) (434) based on the at least one user identifier (440) and PII corresponding to the user; and
generate anonymized PII (442) based on the at least one of the RPSI (434) and an anonymized subscriber identifier (ASI) (432) generated based on the at least one user identifier (440).

15. The computer-readable medium as claimed in claim 14, wherein the processor (440) utilizes at least one of chi-square association measures (436) and tschuprow association measures (438) to apply at least one of a noise and generalization operators to least a portion of the PII for the generation of the RPSI (434).

## Amended claims

### Amended claims in accordance with Rule 137(2) EPC.

1. A method for anonymizing user's Personally Identifiable Information (PII), the method comprising:
extracting, by a tapping unit (305), at least one user identifier (440) corresponding to a user from communication data (310) being communicated over a network (120);
generating, by a live network probe (130), an anonymized subscriber identifier (ASI) by applying a keyed hash function to the at least one user identifier (440) using a key;
generating, by the live network probe (130), Randomized Personal Subscriber Information (RPSI) (434) based on the at least one user identifier (440) and PII corresponding to the user, wherein the generating the RPSI (434) comprises utilizing at least one of chi-square association measures (438) and tschuprow association measures (436) for applying at least one of noise and generalization operators to at least a portion of the PII, and wherein the chi-square association measures (438) and the tschuprow association measures (436) are generated using the PII; and
generating, by the live network probe (130), anonymized PII (442) based on at least one of the RPSI (434) and the anonymized subscriber identifier (ASI) (432).

2. The method as claimed in claim 1, wherein the method comprising analyzing the user's behavior based on the generated anonymized PII (442).

3. The method as claimed in claim 1, wherein the ASI (432) is irreversible.

4. The method as claimed in claim 1, wherein the key corresponding to the keyed hashed function (505) is initialized by a collision-free random number generator (510).

5. The method as claimed in claim 1, wherein the at least one user identifier (440) includes an Internet Protocol (IP) address and an International Mobile Subscriber Identity (IMSI).

6. The method as claimed in claim 1, wherein the method comprises matching data of users in a lookup table (420) with the at least one user identifier (440) to retrieve the PII of the user from the lookup table (420).

7. The method as claimed in claim 1, wherein the generation of the anonymized PII (442) includes appending the RPSI (434) to the ASI (432).

8. A system (400) for anonymizing user's Personally Identifiable Information (PII), the system (400) comprising:
a tapping unit (305) to tap communication data (310) being communicated over a network (120) to extract at least one user identifier (440) corresponding to a user;
a live network probe (130) coupled to the tapping unit (305), wherein the live network probe (130) comprises an anonymizing unit (422) to:
generate an anonymized subscriber identifier (ASI) by applying a keyed hash function to the at least one user identifier (440) using a key;
generate Randomized Personal Subscriber Information (RPSI) (434) based on the at least one user identifier (440) and PII corresponding to the user, wherein the anonymizing unit (422) utilizes at least one of chi-square association measures (438) and tschuprow association measures (436) to apply at least one of noise and generalization operators to at least a portion of the PII to generate the RPSI (434); and
generate anonymized PII (442) based on at least one of the RPSI (434) and the anonymized subscriber identifier (ASI).

9. The system (400) as claimed in claim 8, wherein the anonymizing unit (422) extracts the at least one user identifier (440) from the communication data (404), and wherein the at least one user identifier (440) comprises an Internet Protocol (IP) address and an International Mobile Subscriber Identity (IMSI).

10. The system (400) as claimed in claim 8, wherein the anonymizing unit (422) retrieves the PII of the user from a lookup table (420) by matching data of users in the lookup table (420) with the extracted user identifier (440).

11. The system (400) as claimed in claim 8, wherein the key corresponding to the keyed hashed function (505) is initialized by a collision-free random number generator (510).

12. A non-transitory computer-readable medium comprising computer-readable instructions, which, when executed by a processor (410) in a system (400), cause the processor (410) to:
extract at least one user identifier (440) corresponding to a user from communication data (310) being communicated over a network (120);
generate an anonymized subscriber identifier (ASI) by applying a keyed hash function to the at least one user identifier (440) using a key;
generate Randomized Personal Subscriber Information (RPSI) (434) based on the at least one user identifier (440) and PII corresponding to the user, wherein the processor (410) utilizes at least one of chi-square association measures (436) and tschuprow association measures (438) to apply at least one of a noise and generalization operators to least a portion of the PII for the generation of the RPSI (434); and
generate anonymized PII (442) based on the at least one of the RPSI (434) and the anonymized subscriber identifier (ASI) (432).
